Europäisches Patentamt

European Patent Office

Office européen des brevets

(19)

(11) Veröffentlichungsnummer: **0 236 724**
**B1**

(12) **EUROPÄISCHE PATENTSCHRIFT**

(45) Veröffentlichungstag der Patentschrift: 13.06.90

(51) Int. Cl.⁵: **F 16 H 61/24**

(21) Anmeldenummer: 87101426.2

(22) Anmeldetag: 03.02.87

(54) **Schaltwellenrückführung für ein mehrgängiges Wechselgetriebe, insbesondere für Kraftfahrzeuge.**

(30) Priorität: 06.02.86 DE 3603609

(43) Veröffentlichungstag der Anmeldung:
16.09.87 Patentblatt 87/38

(45) Bekanntmachung des Hinweises auf die
Patenterteilung:
13.06.90 Patentblatt 90/24

(84) Benannte Vertragsstaaten:
BE DE FR GB IT SE

(56) Entgegenhaltungen:
EP-A-0 058 969
DE-C- 287 849
FR-A-2 365 841
GB-A-2 037 916
US-A-4 569 247

(73) Patentinhaber: FORD-WERKE
AKTIENGESELLSCHAFT
Werk Köln-Niehl Henry-Ford-Strasse Postfach 60
40 02
D-5000 Köln 60 (DE)
(84) BE DE IT SE

(73) Patentinhaber: FORD MOTOR COMPANY
LIMITED
Eagle Way
Brentwood Essex CM13 3BW (GB)
(84) GB

(73) Patentinhaber: FORD FRANCE SOCIETE
ANONYME
344 Avenue Napoléon Bonaparte B.P. 307
F-92506 Rueil Malmaison Cedex (FR)
(84) FR

(72) Erfinder: Wilhelmy, Egon
Luisenstrasse 38
D-5340 Bad Honnef 1 (DE)
Erfinder: Sabel, Gustav
Pescher Pfad 5
D-5000 Köln 71 (DE)

(74) Vertreter: Ritzkowsky, Harald, Dipl.-Ing.
Ford-Werke Aktiengesellschaft Patentabteilung
NH/DRP Henry-Ford-Strasse
D-5000 Köln 60 (DE)

Courier Press, Leamington Spa, England.

**Beschreibung**

Die Erfindung bezieht sich auf eine Schaltwellenrückführung für ein mehrgängiges Wechselgetriebe, insbesondere für Kraftfahrzeuge, der im Oberbegriff des Patentanspruchs erläuterten Art.

Aus der DE—A—2935 590 ist eine Schaltwellenrückführung für ein mehrgängiges Wechselgetriebe, insbesondere für Kraftfahrzeuge bekannt, bei der eine zur Vorwahl von Schaltgassen verdrehbare und zum Einlegen der Gänge axial verschiebbare Schaltwelle mit einem mit der Schaltwelle drehfest verbundenen Hebelteil versehen ist, der mit den freien Schenkeln einer im Getriebegehäuse festgelegten Schenkelfeder zusammenwirkt, um die Schaltwelle in eine Neutrallage zurückzuführen.

Die bekannte Schaltwellenrückführung weist den Nachteil auf, daß für ein erwünschtes Erkennen unterschiedlicher Schaltgassen über einen unterschiedlichen Vorwähl-Kraftaufwand ein erhöhter Bauaufwand in Form einer getrennten Kugelrastenanordnung erforderlich ist.

Aus der DE—C—710 699 ist eine Schaltwellenrückführung für ein mehrgängiges Wecheselgetriebe für Motorräder bekannt, bei der eine zum Einlegen der Gänge verdrehbare Schaltwelle drehfest mit einem Hebelteil verbunden ist, der mit einem relativ zur Schaltwelle verschiebbaren, jedoch im Getriebegehäuse gegen Drehung festgehaltenen Halteteil mittels einer Feder zusammenwirkt, um die Schaltwelle in eine Neutrallage zurückzuführen, entsprechend dem im Oberbegriff von Anspruch 1 aufgeführten Merkmalen.

Diese bekannte Schaltwellenrückführung führt die Schaltwelle nicht aus unterschiedlichen Schaltgassen in eine Neutrallage zurück und kann daher auch keinen Hinweis auf einen unterschiedlichen Kraftaufwand zum Erkennen unterschiedlicher Schaltgassen vermitteln.

Die Aufgabe der Erfindung ist es, eine Schaltwellenrückführung der im Oberbegriff des Patentanspruchs genannten Art derart zu verbessern, daß bei geringem baulichen Aufwand nicht nur eine zuverlässige Rückführung der Schaltwelle aus vorgewählten Schaltgassen in die Neutrallage erzielt wird sondern darüberhinaus durch bei Vorwahl unterschiedlicher Schaltgassen zu überwindenden unterschiedlichen Vorwahlkräften ein klares Erkennen der jeweils gewählten Schaltgasse durch den Bediener möglich ist. Dies ist insbesondere für die Schaltgasse wünschenswert, die den Rückwärtsgang oder z.B. einen Schnellgang und den Rückwärtsgang enthält.

Gemäß der Erfindung wird diese Aufgabe gelöst, indem eine Schaltwellenrückführung gemäß dem Oberbegriff des Patentanspruchs die im Kennzeichenteil des Patentanspruchs aufgezeigten Merkmale aufweist.

Dadurch, daß das Hebelteil in einer Flanschfläche zwei um 180° versetzte Muldenbahnen mit in Umfangsrichtung unterschiedlicher Muldentiefe aufweist und an dem über eine Feder axial belasteten und über einen Radialschlitz durch einen im Getriebegehäuse befestigten Stift drehfast gehaltenen Halteteil in um 180° versetzten Flanscherhebungen Kugelpfannen mit drehbar angeordneten Kugeln vorgesehen sind, die in den Muldenbahnen abrollen, kann durch die in Umfangsrichtung unterschiedliche Muldentiefe der Kraftaufwand zur Vorwahl einer Schaltgasse so vorherbestimmt werden, daß der Bediener einen klaren Hinweis auf die von ihm gewählte Schaltgasse durch den zu überwindenden Kraftaufwand erhält.

Die Anmeldung wird anhand eines in der beiliegenden Zeichnung gezeigten Ausführungsbeispieles näher erläutert.

Es zeigt:

Fig. 1 eine Seitenansicht einer Schaltwelle mit im Schnitt gezeigter Schaltwellenrückführung;

Fig. 2 eine Ansicht in Richtung des Pfeiles II—II in Fig. 1 mit der Angabe der wählbaren Schaltgassen und

Fig. 3 einen Tangentialschnitt im Bereich im Kreis III in Fig. 1 in vergrößerter Darstellung.

In einem Getriebegehäuse 1 ist in entsprechenden Bohrungen 2 und 3 eine Schaltwelle 4 radial verdrehbar und axial verschiebbar angeordnet. Auf der Schaltwelle 4 ist normalerweise ein Schaltfinger angeordnet, der mit einer entsprechenden Schaltbetätigung im Getriebegehäuse zusammenwirkt, die im vorliegenden Fall nicht gezeigt ist, da sie für das Verständnis der Erfindung nicht erforderlich ist.

Auf der Schaltwelle 4 ist ein Hebelteil 5 mittels eines Querstiftes 6 festgelegt.

Das Hebelteil 5 weist in seiner Flanschfläche 7 zwei um 180° versetzte Muldenbahnen 8 auf.

Auf der Schaltwelle 4 ist gegenüber dem Hebelteil 5 ein Halteteil 9 angeordnet, gegenüber dem sich die Schaltwelle radial und axial verlagern kann. Das Halteteil 9 wird hierbei über eine Feder 10, die sich an einem Federteller 11 an einem Sicherungsring 12 an der Schaltwelle 4 abstützt, federnd gegen den Hebelteil 5 gedrückt. Das Halteteil 9 weist an einem Vorsprung 13 einen Radialschlitz 14 auf, in den ein im Getriebegehäuse 1 festgelegter Stift 15 einragt, um den Halteteil 9 gegen Verdrehung festzuhalten, wobei jedoch eine axiale Bewegung möglich ist. Das Halteteil 9 ist in um 180° versetzten Flanscherhebungen 16 mit Kugelpfannen 17 versehen, in denen Kugeln 18 drehbar angeordnet sind.

Die Kugeln 18 greifen in die Kugelbahnen 8 am gegenüberliegenden Hebelteil 5 ein und bewegen sich in Umfangsrichtung entlang der Muldenbahnen sobald die Schaltwelle 4 zur Vorwahl einer Schaltgasse radial verdreht wird.

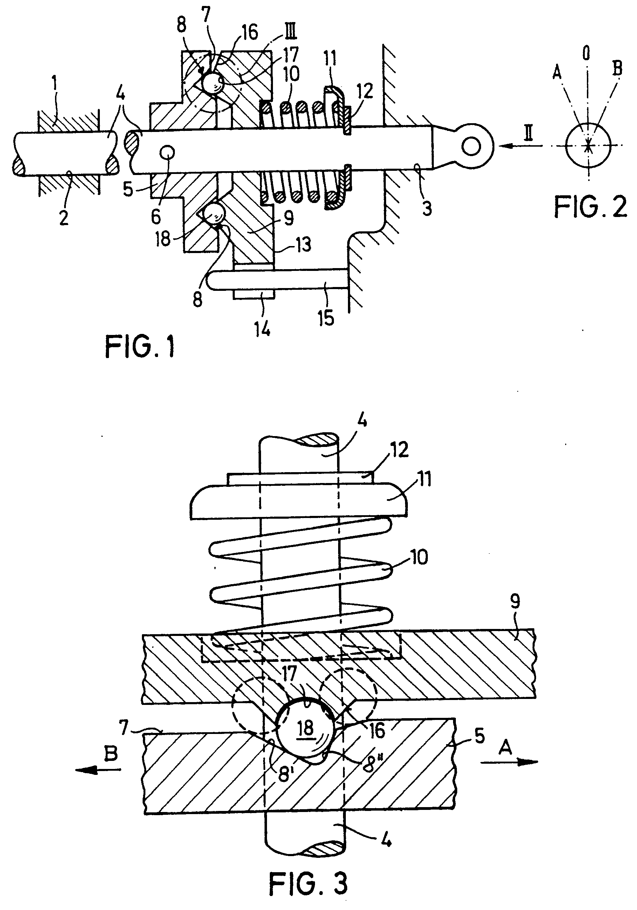

In Fig. 2 sind die im vorliegenden Ausführungsbeispiel vorgesehenen Schaltgassen mit A, 0 und B versehen, wobei 0 die Neutrale-Schaltgasse bezeichnet, in der im vorliegenden Ausführungsbeispiel der 3. und 4. Gang angeordnet ist, während in der Schaltgasse B der 1. und 2. Gang angeordnet ist und in der Schaltgasse A der 5. Gang und der Rückwärtsgang angeordnet ist.

Es wird noch daraufhingewiesen, daß die Angabe der Schaltgassen in Fig. 2 seitenverkehrt zu den Schaltgassen am Handschalthebel liegen, so daß am Handschalthebel bei einem Verschwenken des Handschalthebels nach links die Schaltwelle 4 nach rechts in die Schaltgasse B verdreht wird und so weiter.

Wie insbesondere aus der vergrößerten Schnittdarstellung in Fig. 3 zu ersehen ist, weist die Muldenbahn 8 an der Flanschfläche 7 des Hebelteiles 5 eine unterschiedliche Muldentiefe mit unterschiedlichen Neigungswinkeln auf und die Kugel 18 ist in der Flanscherhebung 16 und der Kugelpfanne 17 im Halteteil 9 derart drehbar angeordnet, daß sie bei einer Relativbewegung des mit der Schaltwelle 4 verbundenen Hebelteiles 5 abrollt. Bei einer Bewegung des Hebelteiles 5 in Richtung des Pfeiles B ist eine geringe gleichförmige Steigung 8'' zu überwinden, die einem geringerem Kraftaufwand entspricht und die den Bediener erkennen läßt, daß er eine Vorwahl in die Schaltgasse des 1. und 2. Ganges ausführt. Bewegt sich der mit der Schaltwelle 4 verbundene Hebelteil 5 in Richtung des Pfeiles A so ist eine größere Steigung 8' zu überwinden, wodurch infolge des höheren Kraftaufwandes der Bediener deutlich merkt, daß er nunmehr eine Vorwahl in die Schaltgasse des 5. Ganges und des Rückwärtsganges durchgeführt hat.

Durch eine Betrachtung der Fig. 3 ist es dem Fachmann leicht erkennbar, daß der Verlauf der Muldentiefe 8', 8'' in Umfangsrichtung in unterschiedlichster Weise modifiziert werden kann, um auch bei mehr als drei Schaltgassen entsprechend unterschiedliche Vorwähl-Kraftaufwände vorzusehen.

## Patentanspruch

Schaltwellenrückführung für ein mehrgängiges Wechselgetriebe, insbesondere für Kraftfahrzeuge mit einer zur Vorwahl von Schaltgassen verdrehbaren und zum Einlegen der Gänge axial verschiebbaren Schaltwelle (4), wobei ein mit der Schaltwelle (4) drehfest verbundenes Hebelteil (5) mit einem relativ zur Schaltwelle verschiebbaren, jedoch im Getriebegehäuse drehfest gehaltenen Halteteil (9) vermittels einer Feder (10) zusammenwirkt um die Schaltwelle in eine Neutrallage rückzuführen, dadurch gekennzeichnet, daß das Hebelteil (5) in einer Flanschfläche (7) zwei um 180 Grad versetzte Mulden (8) aufweist und daß die Mulden (8) Seitenwände mit in Umfangsrichtung unterschiedlicher und/oder veränderlicher Steigung (8' bzw. 8'') besitzen und daß an dem über eine Feder (10) axialbelasteten und über einen Radialschlitz (14) durch einen im Getriebegehäuse (1) befestigten Stift (15) drehfest gehaltenen Halteteil (9) in um 180 Grad versetzten Flanscherhebungen (16) Kugeln (18) in Kugelpfannen (17) drehbar angeordnet sind, die in den Mulden (8) abrollen.

## Revendication

Dispositif de rappel de l'arbre de commande pour boîte de vitesses à plusieurs rapports, en particulier pour véhicules automobiles, comportant un arbre de commande (4) pouvant tourner par la présélection de rainures d'enclenchement et pouvant se déplacer axialement pour l'enclenchement des rapports, une pièce de levier (5) solidaire en rotation de l'arbre de commande (4) coopérant au moyen d'un ressort (10) avec une pièce de maintien (9) qui peut coulisser par rapport à l'arbre de commande (4) mais est immobilisée en rotation dans le carter de la boîte de vitesses, afin de ramener l'arbre de commande dans une position neutre, caractérisé en ce que la pièce de levier (5) présente sur une face de bride (7) deux auges (8) décalées de 180° et en ce que les auges (8) possèdent des parois latérales avec une pente différente et/ou variable (8', 8'') dans le sens périphérique, et en ce que des billes (18) sont disposées à rotation dans des cuvettes sphériques (17) prévues dans des saillies de bride (16) décalées de 180°, sur la pièce de maintien (9) forcée axialement par un ressort (10) et maintenue contre tout mouvement de rotation par une tige (15) fixée dans le carter de la boîte de vitesses (1), par l'intermédiaire d'une fente radiale (14), lesdites billes (18) roulant dans les auges (8).

## Claim

A selector shaft return guide for a multiple-speed transmission, in particular for motor vehicles, having a selector shaft (4) which is rotatable for pre-selecting the gear-shift channels and which is axially displaceable for engaging the gears, a lever member (5) which is connected rotationally rigidly to the selector shaft (4) cooperating by way of a spring (10) with a holding member (9) which is displaceable relative to the selector shaft but is held rotationally rigidly in the transmission housing, in order to guide the selector shaft back into a neutral position, characterized in that the lever part (5) is provided in a flange surface (7) with two grooves (8) offset by 180°, and the grooves (8) comprise lateral walls with an inclination (8' and 8'' respectively) which differs and/or varies in the peripheral direction, and, on the holding member (9) which is acted upon axially by way of a spring (10) and which is held rotationally rigidly by way of a radial slot (14) by a pin (15) secured in the transmission housing (1), balls (18) in ball cups (17), which roll in the grooves (8), are arranged rotatably in raised flange portions (16) offset by 180°.

EP 0 236 724 B1

FIG. 1

FIG. 2

FIG. 3